# EUROPÄISCHE PATENTSCHRIFT

(11) **EP 1 713 976 B1**
(45) Veröffentlichungstag und Bekanntmachung des Hinweises auf die Patenterteilung: **24.06.2009**
(21) Anmeldenummer: 04804917.5
(22) Anmeldetag: 17.12.2004
(51) Int. Cl.: D21H 27/20, D21H 19/32, C09D 1/00, B05D 7/00, B05D 7/04, C08J 7/04, C01B 33/16, C08K 3/22

(54) **KERAMISCHER WANDVERKLEIDUNGSVERBUND**
CERAMIC COMPOSITE WALL COVERING
REVETEMENT COMPOSITE CERAMIQUE POUR PAROI

(30) Priorität: 10.02.2004 DE 102004006612
(43) Veröffentlichungstag der Anmeldung: 25.10.2006
(73) Patentinhaber: Evonik Degussa GmbH, 45128 Essen (DE)
(72) Erfinder: NUN, Edwin, 48727 Billerbeck (DE); WILKES, Marie-Theres, 46284 Dorsten (DE); ARMONEIT, Hannelore, 45659 Recklinghausen (DE); BANKEN, Sigrid, 46282 Dorsten (DE); HENNIGE, Volker, 48249 Dülmen (DE); HYING, Christian, 46414 Rhede (DE); GEIPEL, Gerhard, 45721 Haltern am See (DE); KERN, Norbert, 45721 Haltern am See (DE); BERENDES, Eckart, 45772 Marl (DE); HERKT-BRUNS, Christian, 48157 Münster (DE); GUTSCH, Andreas, 59348 Lüdinghausen (DE)
(86) Internationale Anmeldenummer: PCT/EP2004/053577
(87) Internationale Veröffentlichungsnummer: WO 2005/080684

(56) Entgegenhaltungen:
- EP-A- 1 314 695
- WO-A-98/51747
- DE-B- 1 112 940
- US-A- 3 252 917
- US-A- 4 215 168
- PATENT ABSTRACTS OF JAPAN Bd. 2003, Nr. 05, 12. Mai 2003 (2003-05-12) & JP 2003 013372 A (SANKOO KOGYO KK), 15. Januar 2003 (2003-01-15)
- PATENT ABSTRACTS OF JAPAN Bd. 2000, Nr. 23, 10. Februar 2001 (2001-02-10) & JP 2001 159099 A (JSR CORP), 12. Juni 2001 (2001-06-12)
- PATENT ABSTRACTS OF JAPAN Bd. 2000, Nr. 18, 5. Juni 2001 (2001-06-05) & JP 01 006198 A (MATSUSHITA ELECTRIC WORKS LTD), 10. Januar 1989 (1989-01-10)
- PATENT ABSTRACTS OF JAPAN Bd. 017, Nr. 551 (C-1117), 5. Oktober 1993 (1993-10-05) & JP 05 156055 A (SHOWA DENKO KK), 22. Juni 1993 (1993-06-22)

## Beschreibung

Gegenstand der vorliegenden Erfindung ist ein Wandverkleidungsverbund, bestehend aus einem Trägermaterial und mindestens einer Versiegelungsschicht (Deckschicht), wobei optional ein keramische Zwischenschicht vorhanden sein kann sowie ein Verfahren zu dessen Herstellung

Wandverkleidungsverbunde (Tapeten) sind in einer Vielzahl unterschiedlicher Variationen kommerziell erhältlich. Sie unterscheiden sich durch ihre Struktur, durch die Materialien aus denen sie hergestellt werden und durch ihre Eigenschaften.

Wandverkleidungsverbunde (Tapeten) bestehen in der Regel aus Papier oder Kunststoff und sind farbig, teilweise mit Mustern bedruckt und teilweise mit Strukturen versehen. Eine Einteilung der unterschiedlichen Tapeten in z. B. Leimdruck-, Velours-, Raufaser-, Präge- oder Strukturtapeten, ist durch die verwendeten Materialien und Herstellungsbedingungen gegeben.

Aus dem Stand der Technik sind zudem Tapeten mit speziellen Eigenschaften bekannt. So werden z. B. in der DE 198 05 672 vollständig kompostierbare Wandverkleidungsverbunde offenbart. Tapeten mit einer Kunststoffschicht an der Oberfläche, die dadurch abwaschbar und leichter zu reinigen sind, sind unter anderem aus der DE 195 30 508 bekannt. Die Beständigkeit solcher Tapeten ist häufig sehr gering, weshalb sie insbesondere durch die Krallen von Haustieren oder Kinderspielzeug/-nägel leicht zerkratzt werden können.

Eine in den letzten 10 Jahren verstärkt aufgekommene Variante der Wandverkleidungsverbunde sind solche, die eine mikroorganismen- und keimtötende Wirkung aufweisen. Solche Wandverkleidungsverbunde werden u. a. in DE 101 35 667 und DE 101 36 456 offenbart. Die in DE 41 34 540 offenbarten, desinfizierenden Tapeten enthalten spezielle biokeramische Zusammensetzungen, welche mit speziellen Metallen aus der Gruppe, die aus Silber, Kupfer und Zink besteht, dotiert sind.

Das Einsatzgebiet moderner Wandverkleidungsverbunde vergrößert sich stetig. Zudem werden durch die zunehmende Automatisierung und den Einsatz von Maschinen bei der Verarbeitung der Wandverkleidungsverbunde immer speziellere Anforderungen an die Verbunde gestellt. Gleichzeitig sollen die Wandverkleidungsverbunde vielseitig gestaltbar und kostengünstig sein. Es besteht somit ein stetiger Bedarf an neuen Wandverkleidungsverbunden. Neue Wandverkleidungsverbunde sollten nach Möglichkeit leicht zu handhaben sein und trotzdem eine gute Haltbarkeit aufweisen. Mit Ausnahme von Glasfasertapeten weisen alle flexiblen Wandverkleidungsverbunde schlechte Einstufungen bei Beflammungen auf.

Aufgabe der vorliegenden Patentanmeldung ist es daher, Wandverkleidungsverbunde zur Verfügung zu stellen, die eine gute Kratzfestigkeit, ein gute Abwaschbarkeit und/oder ein verbessertes Brandverhalten aufweisen. Ferner soll ein Verfahren zur Herstellung der Wandverkleidungsverbunde bereitgestellt werden.

Überraschenderweise wurde gefunden, dass Wandverkleidungsverbunde wie in den Ansprüchen definiert sowie hergestellt gemäß einem Verfahren wie in den Ansprüchen definiert, die gestellte Aufgabe hervorragend lösen.

Gegenstand der vorliegenden Erfindung sind daher Wandverkleidungsverbunde aufweisend ein Trägermaterial (1), zumindest eine keramische Beschichtung (2), die keramische Partikel, ausgewählt aus den Oxiden, Nitriden, Boriden oder Carbiden der Metalle oder Halbmetalle, eingebettet in eine Matrix, die aus einem Silizium aufweisenden Netzwerk, welches durch Si-O-Si-Brücken verknüpft ist, aufweist, und eine oder mehrere keramische Zwischenschichten (3) entsprechend den Ansprüchen.

Ebenfalls Gegenstand der vorliegenden Erfindung ist ein Verfahren zur Herstellung von erfindungsgemäßen Wandverkleidungsverbunden wie in den Ansprüchen definiert, welches unter anderen dadurch gekennzeichnet ist, dass auf ein Trägermaterial direkt oder nach Aufbringen einer oder mehrerer Zwischenschichten eine Suspension, die keramische Partikel, suspendiert in einem polymeren Sol, hergestellt durch Mischen zumindest eines Silans mit einem Alkohol und einer Säure, aufgebracht wird und anschließend verfestigt wird.

Der Vorteil der erfindungsgemäßen Wandverkleidungsverbunde liegt unter anderem darin, dass sie ein verbessertes Brandverhalten aufweisen, d. h. sie erreichen gemäß DIN 53 483 Teil 3 die Brandschutzklassen F1.

Ein weiterer Vorteil der vorliegenden Erfindung besteht darin, dass durch die Verwendung von Anastas in der keramischen Beschichtung die erfindungsgemäßen Tapeten keimtötende Wirkungen durch photokatalytische Effekte aufweisen können. Dazu sind keine freien Metallionen notwendig.

Ebenfalls vorteilhaft an den erfindungsgemäßen Wandverkleidungsverbunden ist deren höhere mechanische Belastbarkeit So zeigen die erfindungsgemäßen Verbunde eine besonders gute Kratzfestigkeit. Die erfindungsgemäßen Verbunde können deshalb insbesondere zur Verkleidung von Wänden in öffentlichen Gebäuden, aber auch zur Verkleidung der Wände von Gegenständen, wie z. B. Rückseiten von Sitzen in öffentlichen Verkehrsmitteln oder Innenwänden von Verkehrsmitteln verwendet werden.

Ein weiterer Vorteil der erfindungsgemäßen Wandverkleidungsverbunde ist, dass sie weitestgehend resistent gegen Chemikalien, wasserabweisend und abwaschbar ausgeführt sein können.

Die Verarbeitungseigenschaften der erfindungsgemäßen Wandverkleidungsverbunde sind im Vergleich zu herkömmlichen Papiertapeten besser, da sie eine geringere Neigung zum Reißen zeigen.

Je nach Art der verwendeten Deckschicht können die erfindungsgemäßen keramischen Tapeten mit sehr unterschiedlichen Oberflächeneigenschaften ausgerüstet sein, so dass diese Tapeten für die diversen Verwendungszwecke unterschiedliche Deckschichten aufweisen können.

Sind die Deckschichten transparent, so können damit Dekorschichten, die auf die keramische Schicht (2) aufgebracht wurden, vor Beschädigung oder anderen äußeren Einflüssen geschützt werden. Insbesondere bei der Verwendung von transparenten keramischen Beschichtungen sind die Oberflächen solcher Tapeten sehr kratz-, scheuer- und abriebfest. Die keramische Beschichtung bringt zudem weitere Vorteile mit sich. Insbesondere das Brandverhalten von mit keramischen Beschichtungen ausgerüsteten Flächengebilden ist deutlich verbessert im Vergleich zu dem nicht mit Keramik beschichteten Produkt. So verlöscht eine erfindungsgemäß beschichtete native Papiertapete von selbst. Das entspricht der UL-Brandklasse F1.

Die erfindungsgemäßen Wandverkleidungsverbunde werden im Folgenden beschrieben, ohne dass die Erfindung auf diese Ausführungsarten beschränkt sein soll. Im Rahmen der vorliegenden Erfindung sollen die Begriffe Wandverkleidungsverbund und Tapete gleichwertig sein und werden beide als Bezeichnung für den erfindungsgemäßen Gegenstand verwendet.

Die erfindungsgemäßen Wandverkleidungsverbunde zeichnen sich dadurch aus, dass sie ein Trägermaterial (1) und zumindest eine keramische Beschichtung (2) aufweisen, die keramische Partikel, ausgewählt aus den Oxiden, Nitriden, Boriden oder Carbiden der Metalle oder Halbmetalle, eingebettet in eine Matrix, die aus einem Silizium aufweisenden Netzwerk besteht, welches durch Si-O-Si-Brücken verknüpft ist, aufweist. Die eingebetteten Partikel sind dabei vollständig von der Matrix umhüllt.

Das Trägermaterial (1) kann zumindest ein Vlies, ein Gewebe, ein Gewirke, ein Filz oder eine Folie oder ein Verbund, der ein Vlies, ein Gewebe, ein Gewirke, ein Filz oder eine Folie enthält, sein. Vorzugsweise weist das Trägermaterial zumindest ein überwiegend Cellulose-, Polymer-, Glas-, Metall- oder Keramikfasern enthaltendes Flächengebilde oder eine Polymerfolie auf Geeignete Flächengebilde können z. B. Metallgewebe, wie z. B. Stahl- oder Kupfergewebe, Polymervliese oder -gewebe oder ein- oder mehrschichtige Papiermaterialien sein. Das Papier kann dabei sowohl holzhaltig als auch holzfrei sein. Ebenso kann der Träger eine handelsübliche Tapete, wie z. B. eine Raufasertapete, eine Vinyltapete oder eine Phototapete sein. Auch Poster oder Werbeplakate sind als Trägermaterialien geeignet. Die Dicke des Trägermaterials ist nicht kritisch, wobei die Dicke bevorzugt so gewählt wird, dass das Trägermaterial eine genügend hohe Flexibilität/Biegbarkeit aufweist, damit die erfindungsgemäße Tapete ebenfalls biegbar bzw. flexibel ist.

Für den Fall, dass das Trägermaterial aus mehrschichtigem Papier besteht, können die einzelnen Papierschichten mit allen bekannten Methoden miteinander verbunden worden sein. So können die Schichten z. B. einer Trocken- oder Nasskaschierung unterzogen worden sein oder mit oder ohne Verwendung eines Klebstoffs miteinander verpresst worden sein. Die Papierlagen können sowohl nass als auch trocken miteinander verbunden worden sein. Zwischen den einzelnen Papierlagen können Zwischenschichten enthaltend Haftvermittler oder Klebstoffe oder andere Bindemittel vorhanden sein.

Das Silizium aufweisende Netzwerk der keramischen Beschichtung (2), welches die Matrix bildet, kann ein rein anorganisches Netzwerk sein, welches über die Sauerstoffbrücken gebildet wird oder aber ein anorganisch-organisches Netzwerk sein. Bei einem solchen anorganischorganischen Silizium aufweisenden Netzwerk weist dieses organische Reste auf, die an das Silizium gebunden sind. Je nach Art der Reste können diese wiederum untereinander verbunden sein bzw. ein organischer Rest ist an zwei oder mehr Silizium-Atome gebunden. Vorzugsweise sind jeweils zumindest zwei organische Reste über kovalente Bindungen verbunden. Je nach der bei der Herstellung der Schicht eingesetzten Verbindungen, insbesondere der eingesetzten Silane können solche zwei über eine kovalente Bindung verknüpften organische Reste z. B. eine Struktureinheit gemäß Formel **I** aufweisen.

-C₃H₆-O-CH₂-CH(OH)-CH₂-NH-C₃H₆- **I**

Eine solche Struktureinheit wird z.B. bei der Umsetzung der Silane AMEO (3-Aminopropyltriethoxysilane) und GLYEO (3-Glycidyloxypropyltriethoxysilan) erhalten. Weitere bevorzugt vorhandene Struktureinheiten sind solche, die durch Reaktion des UV-vernetzenden Silans MEMO (3-Methacryloxypropyltrimethoxysilan) mit sich selbst oder durch Reaktion von GLYMO (3-Glycidyloxypropyltrimethoxysilan) und AMEO erhalten werden.

In einer besonders bevorzugten Ausführungsform des erfindungsgemäßen Verbundes sind die Silizium-Atome zumindest teilweise über einen organischen Rest verbunden, der eine Struktureinheit gemäß der Formel **II** 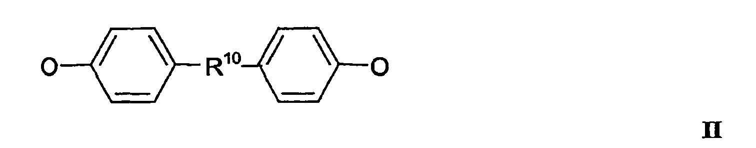 mit R¹⁰ gleich einem organischen Rest, insbesondere einem substituierten oder unsubstituierten Alkyl-, Aryl-, Acyl- oder Alkylarylrest aufweist. Besonders bevorzugt ist der Rest R¹⁰ ein Dimethylmethylenrest. Eine solche Struktureinheit kann z. B. erhalten werden, wenn Bisphenol A mit den Silanen (Ethoxysilanen) umgesetzt wird.

Die in der Matrix der keramischen Beschichtung (2) eingebetteten Partikel weisen vorzugsweise eine mittlere Partikelgröße der Elementarteilchen von 1 nm bis 1 µm auf. Die Partikel können pyrogene oder kristalline Partikel sein. Sind pyrogene Partikel, wie z. B. pyrogene Kieselsäuren in der Matrix eingebettet, so weisen diese bevorzugt eine mittlere Partikelgröße der Primärpartikel von 1 bis 50 mn, vorzugsweise von 5 bis 25 nm auf. Sind kristalline Partikel vorhanden, wie z. B. Aluminiumoxid der Martinswerke, so weisen diese bevorzugt eine mittlere Partikelgröße von 50 nm bis 1 µm, vorzugsweise von 100 bis 500 nm, auf. Unter pyrogenen Partikeln werden Partikel verstanden, die durch Flammenpyrolyse erhalten werden. Unter kristallinen Partikeln werden Partikel verstanden, die durch Kristallisation aus Lösungen, Schmelzen oder der Dampfphase, oder aber durch Mahlprozesse mineralischer Stoffe erhalten werden.

Besonders bevorzugte Partikel, die in der Matrix eingebettet sind, sind Partikel von Oxiden der Elemente Al, Zr, Si, Ti, Ce oder Fe. Ganz besonders bevorzugte Partikel sind POSS-Cluster oder hydrophobierte Kieselsäuren, wie sie z. B. von der Degussa unter der Bezeichnung Aerosil, Aeroxide, Aluminiumoxid oder Titandioxid P25 angeboten werden. Unter POSS-Clustern, werden polyedrische oligomere Silizium-Sauerstoffcluster, gemäß der Formel **III** verstanden:

[(RₐX_{b}SiO_{1,5})ₘ(R_{c}X_{d}SiO)ₙ(RₑX_{f}Si₂O_{2,5})ₒ(R_{g}XₕSi₂O₂)ₚ] **III**

mit:
a, b, c = 0-1; d =1-2; e,g,f = 0-3; h =1-4;
m+n+o+p ≥ 4; a+b =1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sein können, oder weitere funktionalisierte polyedrische oligomere Silizium-Sauerstoffclustereinheiten, die über eine Polymereinheit oder eine Brückeneinheit angebunden sein können,
**X =** Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,** wobei sowohl die Substituenten vom Typ **R** als auch vom Typ **X** gleich oder unterschiedlich sein können.

Silasesquioxane sind oligomere oder polymere Stoffe, deren vollständig kondensierte Vertreter die allgemeine Formel (SiO_{3/2}R)ₙ besitzen, wobei n ≥ 4 und der Rest R ein Wasserstoffatom sein kann, meist jedoch einen organischen Rest darstellt und stellen einen Spezialfall der POSS-Cluster dar. Die kleinste Struktur eines Silasesquioxans ist der Tetraeder. Voronkov und Lavrent'yev (Top. Curr. Chem. 102 (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolysierbare Gruppe, wie z. B. Chlorid, Alkoxid oder Siloxid, darstellt. Lichtenhan et al. beschreiben die basenkatalysierte Herstellung von oligomeren Silasesquioxanen (WO 01/10871). Silasesquioxane der Formel R₈Si₈O₁₂ (mit gleichen oder unterschiedlichen Kohlenwasserstoffresten **R**) können basenkatalysiert zu funktionalisierten, unvollständig kondensierten Silasesquioxanen, wie z. B. R₇Si₇O₉(OH)₃ oder auch R₈Si₈O₁₁(OH)₂ und R₈Si₈O₁₀(OH)₄, umgesetzt werden (Chem. Commun. (1999), 2309-10; Polym. Mater. Sci. Eng. 82 (2000), 301-2; WO 01/10871) und damit als Stammverbindung für eine Vielzahl verschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Oligomere Sphärosilikate sind ähnlich aufgebaut wie die oligomeren Silasesquioxane. Auch sie besitzen eine "käfigartige" Struktur. Im Unterschied zu den Silasesquioxanen, bedingt durch ihre Herstellungsmethode, sind die Siliziumatome an den Ecken eines Sphärosilikates mit einem weiteren Sauerstoffatom verbunden, welches wiederum weiter substituiert ist. Oligomere Sphärosilikate lassen sich durch Silylierung geeigneter Silikat-Vorstufen herstellen (D. Hoebbel, W. Wieker, Z. Anorg. Allg. Chem. 384 (1971), 43-52; P. A. Agaskar, Colloids Surf. 63 (1992), 131-8; P. G. Harrison, R Kannengiesser, C. J. Hall, J. Main Group Met Chem. 20 (1997), 137-141; R Weidner, Zeller, B. Deubzer, V. Frey, Ger. Offen. (1990), DE 38 37 397).

Es versteht sich von selbst, dass die keramische Beschichtung alle vorgenannten Arten von Partikeln allein oder als Mischung der verschiedenen Partikel enthalten kann.

Geeignete polyedrische Silsesquioxane können beispielsweise bei Hybrid Plastics, Fountain Valley, USA bezogen werden. Verfahren zur Herstellung von POSS-Clustern können z. B. DE 100 60 776, DE 101 56 622, DE 101 56 619 oder DE 103 01 754 entnommen werden.

Die keramische Beschichtung (2), welche auf zumindest einer Seite des erfindungsgemäßen Verbundes die oberste Schicht des Verbundes (Deckschicht) bildet, weist vorzugsweise eine Dicke von kleiner 100 µm, vorzugsweise von 50 nm bis 100 µm, besonders bevorzugt von 100 mm bis 20 µm und ganz besonders bevorzugt von 1 bis 10 µm auf. Die Dicke der Schicht ist dabei naturgemäß abhängig von der mittleren Partikelgröße der eingesetzten Partikel und muss deshalb immer größer sein, als die mittlere Partikelgröße der eingesetzten Partikel.
Es kann vorteilhaft sein, wenn die keramische Beschichtung (2) durchlässig ist für elektromagnetische Strahlung mit einer Wellenlänge im Bereich des sichtbaren Lichts. Auf diese Weise ist es möglich, dass auch durch die keramische Beschichtung hindurch Informationen, die auf darunter liegenden Schichten vorhanden sind, wie z. B. Muster, Photos, Zeichnungen oder Text, sichtbar bleibt Damit eine solche Durchlässigkeit erreicht werden kann ist es notwendig, dass die in der Matrix vorhandenen Partikel eine Größe aufweisen, die kleiner als die Wellenlänge des sichtbaren Lichts ist

Die in dem erfindungsgemäßen Wandverkleidungsverbund als Deckschicht vorhandene keramische Beschichtung (2) kann je nach den gewünschten Eigenschaften der Oberfläche des erfindungsgemäßen Verbundes unterschiedliche Eigenschaften aufweisen und zu diesem Zweck weitere oder bestimmte Materialien aufweisen. Soll die keramische Beschichtung z. B. opak oder in einer bestimmten Färbung vorliegen, so kann die keramische Beschichtung zusätzlich z. B. Pigmente oder Farbstoffe aufweisen. Soll die keramische Beschichtung photokatalytisch aktiv sein, so weist diese vorzugsweise Anatas-Partikel an der Oberfläche auf. Wenn die keramische Beschichtung für gasförmige Stoffe durchlässig sein soll, so weist sie vorzugsweise keine organischen Reste auf. Auch Kombinationen dieser Eigenschaften sind möglich, wobei die keramische Beschichtung dann eine Kombination der unterschiedlichen Substanzen aufweist.

Die keramische Beschichtung und damit der erfindungsgemäße Verbundwerkstoff ist für Wasser undurchlässig. Wobei unter für Wasser undurchlässig verstanden wird, das Wasser bei einem Druck von 1 m Wassersäule bei Normalbedingungen nicht durch die keramische Schicht hindurchdringt. Eine hohe Wasserdichtigkeit wird erzielt, wenn die eingesetzten Partikel eine möglichst geringe Partikelgröße und vorzugsweise hydrophobe Eigenschaften aufweisen. So ausgestattete erfindungsgemäße Verbunde können bis zu einem Druck von 2 m, vorzugsweise sogar 5 m Wassersäule dicht gegenüber Wasser sein.

Die Oberfläche des Verbundes, die durch die keramische Beschichtung realisiert wird, kann glatt oder rau ausgeführt sein. Die Rauhigkeit kann dabei durch Erhebungen gebildet werden, die durch die Partikel in der Matrix hervorgerufen werden oder aber aus Erhebungen resultieren, die im Trägermaterial bzw. in der Schicht, die unter der keramischen Beschichtung vorhanden ist

Wie bereits angedeutet können in dem erfindungsgemäßen Wandverkleidungsverbund eine oder mehrere Zwischenschichten zwischen dem Trägermaterial (1) und der keramischen Schicht (2) vorhanden sein. Solche Zwischenschichten können z. B. eine oder mehrere Komponenten, ausgewählt aus Klebern, Haftvermittler, Bindemitteln, Farbstoffen und Pigmenten enthalten. Insbesondere mit Druckfarben können beispielsweise Dekore direkt auf das Trägermaterial oder auf eine unter der keramischen Beschichtung vorhandene Schicht gedruckt werden. Die Zwischenschichten können insbesondere Klebstoffe, Haftvermittler oder Bindemittel aufweisen, wenn sie zur besseren Verbindung der sie umgebenden Schichten vorgesehen sind. Es kann vorteilhaft sein, ist aber keine zwingende Voraussetzung, dass die als Deckschicht vorhandene keramische Beschichtung (2) mittels Zwischenschichten enthaltend Haftvermittler oder Klebstoff oder dergleichen mit der keramischen Schicht (2) verbunden ist Die Zwischenschichten können insbesondere Druckfarben und Pigmente aufweisen, wenn diese Schichten zur Wiedergabe von Mustern, Schriftzeichen oder Bildern verwendet werden.

Die erfindungsgemäßen Wandverkleidungsverbunde können bedruckt und eingefärbt sein,
wobei ein Druck auf das Trägermaterial oder die unter der Deckschicht vorhandene Schicht bevorzugt ist, da so ein Schutz des Dekors erzielt wird.

Es kann besonders vorteilhaft sein, wenn im erfindungsgemäßen Wandverkleidungsverbund zwischen dem Trägermaterial (1) und der keramischen Beschichtung (2) eine keramische Zwischenschicht (3) vorhanden ist, die durch zumindest einen anorganischen Kleber untereinander und mit der unter der keramischen Schicht (3) vorhandenen Schicht verbundene Partikel einer anorganischen Komponente, die im wesentlichen zumindest eine Verbindung auszumindest einem Metall, zumindest einem Halbmetall oder zumindest einem Mischmetall mit zumindest einem Element der 3. bis 7. Hauptgruppe aufweist, enthält.

Das keramische Material der Zwischenschicht (3) weist bevorzugt zumindest ein Oxid der Metalle Al, Zr, Si, Sn, Ti und/oder Y, besonders bevorzugt ein Oxid der Metalle Al, Zr, Ti und/oder Si, als anorganische Komponente auf. Diese Oxide können sowohl das Material sein, aus dem die Partikel der anorganischen Komponente bestehen als auch das Material des anorganischen Klebers sein. Die Oxide für die Partikel und den anorganischen Kleber können gleich oder unterschiedlich sein. Vorzugsweise bestehen die Partikel und der anorganische Kleber aus unterschiedlichen Oxiden.

Es kann vorteilhaft sein, wenn die Zwischenschicht bzw. die anorganischen Komponenten, die diese Zwischenschicht ausmachen, über Haftvermittler an eine darunter liegende Schicht oder an das Trägermaterial (1) gebunden ist. Typische Haftvermittler sind organofunktionelle Silane, wie sie beispielsweise von der Fa. Degussa unter dem Handelsnamen "Dynasilan" angeboten werden.

Vorzugsweise liegt in der Zwischenschicht (3) zumindest eine anorganische Komponente in einer Komgrößenfraktion mit einer mittleren Partikelgröße von 1 bis 249 nm oder mit einer mittleren Partikelgröße von 250 bis 10000 nm, besonders bevorzugt von 250 bis 1750 nm vor.
Es kann vorteilhaft sein, wenn ein erfindungsgemäßer Wandverkleidungsverbund eine Zwischenschicht (3) aufweist, die zumindest zwei Partikelgrößenfraktionen zumindest einer anorganischen Komponente aufweist. Ebenso kann es vorteilhaft sein, wenn die Zwischenschicht (3) zumindest zwei Parkikelgrößenfraktionen von zumindest zwei anorganischen Komponenten aufweist. Das Partikelgrößenverhältnis kann von 1 :1 bis 1:10000, vorzugsweise von 1:1 bis 1:100 betragen. Das Mengenverhältnis der Partikelgrößenfraktionen im Verbundwerkstoff kann vorzugsweise von 0,01 : 1 bis 1 : 0,01 betragen.

In einer weiteren bevorzugten Ausfuhnmgsform weist die keramische Zwischenschicht (3) vorzugsweise Partikel von Oxiden ausgewählt aus Al₂O₃, ZrO₂, Y₂O₃, TiO₂ und/oder -SiO₂ mit einer mittleren Partikelgröße von 200 nm bis 5 µm, vorzugsweise von 0,5 bis 2 µm und ein Silizium aufweisendes Netzwerk auf, wobei das Silizium des Netzwerks über Sauerstoffatome an die Oxide der keramischen Beschichtung, über organische Reste an die unter der Deckschicht liegende Schicht und über zumindest eine, Kohlenstoffatome aufweisende Kette an ein weiteres Silizium gebunden ist

In einer besonders bevorzugten Ausführungsform weist die keramische Zwischenschicht (3) des erfindungsgemäßen Wandverkleidungsverbunds zwei Friktion von Oxiden ausgewählt aus Al₂O₃, ZrO₂, TiO₂,Y₂O₃ und/oder SiO₂ auf, wobei die erste Fraktion aus einem Sol erhalten wurde und die zweite Fraktion Partikel mit einer mittleren Partikelgröße von 200 nm bis 5 µm vorzugsweise von 0,5 bis 2 µm aufweist, und die erste Fraktion als Schicht auf den Partikeln der zweiten Fraktion vorhanden ist und die erste Fraktion mit einem Anteil an der Beschichtung von 1 bis 30 Massenteilen, die zweite Fraktion mit einem Anteil an der Beschichtung von 5 bis 94 Massenteilen in der keramischen Beschichtung vorhanden ist und außerdem ein Silizium aufweisendes Netzwerk vorhanden ist, wobei das Silizium des Netzwerks über Sauerstoffatome an die Oxide oder ein weiteres Silizium gebunden ist und über organische Reste (Kohlenstoffatome aufweisende Kette) ebenfalls an ein weiteres Silizium, an das Material einer darunter liegenden Schicht oder an das Trägermaterial gebunden ist. Die Kohlenstoffatome aufweisende Kette weist vorzugsweise außerdem zumindest ein Stickstoffatom aus Bevorzugt weist die erfindungsgemäße keramische Zwischenschicht (3) ein Silizium aufweisendes Netzwerk auf, bei dem die Ketten, mit welchen die Siliziumatome unter einander über Kohlenstoffatome verbunden sind, durch Stickstoff aufweisende Ketten verbundenen Siliziumatome durch Addition einer Aminogruppe an eine Glycidyl-Gruppe erhalten wurde. Durch diese Ketten zwischen den Siliziumatomen liegt neben einem anorganischen Netzwerk, welches über Si- bzw. Metall-Sauerstoffbrücken entsteht ein zweites mit diesem vernetztes organisches Netzwerk vor, durch das die Stabilität der keramischen Zwischenschicht, insbesondere auch gegenüber Wasser, verstärkt wird

Je nach Ausführungsart der keramischen Zwischenschicht (3) kann diese als erste keramische Fraktion Partikel, insbesondere Partikel mit einer mittleren Partikelgröße von kleiner 20 nm aufweisen. Eine solche keramische Fraktion kann z. B. über ein partikuläres Sol hergestellt worden sein. In einer anderen bevorzugten Ausführungsform der erfindungsgemäßen Membran enthält die keramische Fraktion Partikel oder ein polymerartiges anorganisches Netzwerk, welche über ein polymeres Sol hergestellt wurden. Die keramische Fraktion weist vorzugsweise eine Schichtdicke kleiner 100 nm, bevorzugt kleiner 50 nm auf der Oberfläche der Partikel der zweiten Fraktion auf. Die Zweite Fraktion von Partikeln weist vorzugsweise eine BET-Oberfläche von kleiner 5 m²/g auf.

Die erfindungsgemäßen Wandverkleidungsverbunde sind vorzugsweise flexibel und lassen sich vorzugsweise ohne Beschädigung bis auf jeden Radius bis herab zu 20 cm, vorzugsweise bis herab zu 5 cm und ganz besonders bevorzugt bis herab zu 10 mm biegen. Die gute Biegbarkeit der erfindungsgemäßen Wandverkleidungsverbunde hat den Vorteil, dass die keramischen Wandverkleidungsverbunde widerstandsfähig gegen mechanische Belastungen, wie z. B. Zerreißen sind, ohne einen Verlust an Flexibilität in Kauf nehmen zu müssen. So können die erfindungsgemäßen Wandverkleidungsverbunde analog zu herkömmlichen Wandverkleidungsverbunden in Rollen aufgewickelt, gelagert, ausgeliefert und verarbeitet werden.

Die erfindungsgemäßen Wandverkleidungsverbunde können durch das erfindungsgemäße Verfahren hergestellt werden, welches dadurch gekennzeichnet ist, dass zur Herstellung einer abschließenden keramischen Beschichtung (2) auf ein Trägermaterial direkt oder nach Aufbringen einer oder mehrere Zwischenschichten eine Suspension, die keramische Partikel, suspendiert in einem polymeren Sol, hergestellt durch Mischen zumindest eines Silans mit einem Alkohol und einer Säure, aufgebracht wird und anschließend verfestigt wird Die Suspension kann im erfindungsgemäßen Verfahren z. B. durch Aufdrucken, Aufpressen, Einpressen Aufrollen, Aufrakeln, Aufstreichen, Tauchen, Spritzen oder Aufgießen auf und gegebenenfalls in das Trägermaterial oder eine gegebenenfalls vorhandene Zwischenschicht gebracht werden.

Die Dicke des eingesetzten Trägermaterials ist beliebig zu wählen, wobei das Trägermaterial bevorzugt eine Flexibilität oder Biegbarkeit aufweist, die der Flexibilität/Biegbarkeit des herzustellenden Verbundes entspricht bzw. jene übersteigt. Besonders bevorzugt werden solche Trägermaterialien eingesetzt, wie sie bei der Beschreibung des erfindungsgemäßen Wandverkleidungsverbundes beschrieben wurden.
Als keramische Partikel können alle geeigneten Partikel eingesetzt werden. Besonders bevorzugt werden als keramische Partikel Oxide, Carbide, Nitride oder Boride von Metallen oder Halbmetallen eingesetzt. Weitere besonders bevorzugt eingesetzte Partikel, wie z. B. POSS-Partikel sowie bevorzugte Partikelgrößen können der vorangehenden Beschreibung des Verbundes selbst entnommen werden, auf die hier ausdrücklich verwiesen wird. Wiederum können auch Mischungen der verschiedenen Partikel eingesetzt werden.

Die zur Herstellung der Suspension verwendeten polymeren Sole können durch Hydrolyse eines Silans hergestellt werden. Die polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.%, vorzugsweise sehr viel weniger als 20 Gew.% an Wasser und/oder wässriger Säure auf. Um auf den bevorzugten Anteil von Wasser und/oder wässriger Säure zu kommen, wird die Hydrolyse vorzugsweise so durchgeführt, dass das zu hydrolisierende Silan mit dem 0,5 bis 10-fachen Molverhältnis und bevorzugt mit dem halben Molverhältnis an Wasser in Form einer wässrigen Säure, vorzugsweise einer wässrigen Mineralsäure oder einer wässrigen organischen Säure, bezogen auf die hydrolisierbaren Gruppen, der hydrolisierbaren Verbindung, hydrolisiert wird. Die eingesetzt wässrige Säure ist vorzugsweise 0,1 bis 5 Gew.-%ig, besonders bevorzugt von 0,5 bis 2 Gew.%ig. Eine bis zu 10-fache Menge an Wasser kann bei sehr langsam hydrolisierenden Verbindungen, wie z.B. beim Tetraethoxysilan, eingesetzt werden. Eine Hydrolyse mit weniger als der bevorzugten Menge an Wasser führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser polymeren Sole werden die zu hydrolisierenden Silane zunächst in einem Alkohol, insbesondere Ethanol, Isopropanol, Butanol oder Amylalkohol gelöst bevor die eigentliche Hydrolyse vorgenommen wird Die Menge des eingesetzten Alkohols wird so gewählt, dass die erhaltene Suspension bzw. das erhaltene Sol eine ausreichend hohe Viskosität aufweist. Je nach den Anforderungen an die Viskosität der Suspension, die von dem Untergrund, auf den sie aufgebracht werden sollen, und/oder den Verarbeitungsbedingungen abhängen, kann die Menge an Alkohol, die zugegeben wird, variiert werden. Durch Zugabe größerer Mengen an Alkoholen (Monoalkoholen) kann die Viskosität gesenkt werden. Durch Abdestillieren des als Lösemittels verwendeten Alkohols im Vakuum bei Raumtemperatur kann die Viskosität der Suspension gesteigert werden. Weiterhin ist eine Viskositätseinstellung über die Zuschlagsmenge an pyrogenen Kieselsäuren, sogenannten Aerosilen, möglich.

Um nach dem Verfestigen zu einer möglichst stabilen keramischen Beschichtung zu gelangen, hat es sich als vorteilhaft erwiesen, wenn das Gewichtsverhältnis von Silanen zu eingesetzten Partikeln von 1 zu 1000 bis 1 zu 2, vorzugsweise von 1 zu 100 bis 1 zu 10 beträgt

In einer besonderen Ausführungsform des erfindungsgemäßen Verfahrens kann, die Suspension wenn das Sol auf Tetraethoxysilan (TEOS), 3-Glycidyloxytrimethoxysilan (GLYMO) und/oder 3-Glycidyloxytriethoxysilan (GLYEO) basiert, durch Erwärmen verfestigt werden. Bei dieser Ausführungsform des erfindungsgemäßen Verfahren kann es vorteilhaft sein, wenn eine Suspension eingesetzt wird, der Di- oder Polyole, insbesondere aromatische Gruppen aufweisende Di- oder Polyole, wie z. B. Bisphenole, insbesondere Bisphenol A zugesetzt wurden. Durch die Zugabe dieser Di- oder Polyole wird erreicht, dass nach dem Verfestigen der Suspension die durch die Matrix gebildete Oberfläche eine besonders große Wasserdichtheit aufweist. Bevorzugt weist eine erfindungsgemäße Suspension von 5 bis 50 Gew.%, besonders bevorzugt von 10 bis 40 Gew.% an Di- und/oder Polyolen auf.

In einer Variante dieser Ausführungsform wird die einzusetzende Suspension in zwei Schritten hergestellt wird, wobei im ersten Schritt zunächst eine Mischung von Silan, Alkohol und Säure hergestellt wird, in welche die Partikel eingerührt werden und in einem zweiten Schritt dieser ersten Komponente als zweite Komponente ein weiteres Silan und/oder ein Diol oder Polyol zugesetzt wird, bevor die Suspension erwärmt wird. Dies hat den Vorteil, dass das im ersten Schritt erhaltene Sol voraktiviert ist, aber eine Lagerstabilität von vorzugsweise mindestens 30 Tagen, bevorzugt bis zu 30 Tagen aufweist. Wird die zweite Komponente zugesetzt (Härtungskomponente), so beträgt die Topfzeit vorzugsweise zumindest 4 Tage. Werden die beiden verwendeten Silane entgegen der bevorzugten Variante aber zuerst gemischt und dann angesäuert, liegt die Topfzeit unterhalb von 4 Tagen, in der Regel unterhalb von 2 Tagen. Besonders bevorzugt wird die einzusetzende Suspension in zwei Schritten hergestellt wird, wobei im ersten Schritt zunächst eine Mischung von GLYEO, Alkohol und Säure hergestellt wird, in welche die Partikel eingerührt werden und in einem zweiten Schritt dieser ersten Komponente als zweite Komponente AMEO und/oder ein Diol oder Polyol zugesetzt wird, bevor die Suspension erwärmt wird. Durch dieses Zweikomponenten-System ist es möglich fertige Mischungen der Komponenten 1 und 2 bereitzustellen, die eine gewisse Lagerstabilität aufweisen. Durch einfache Mischung der beiden Komponenten am Einsatzort wird auf einfache Weise eine gebrauchsfertige Mischung zur Herstellung der erfindungsgemäßen Deckschicht erhalten.

Das Erwärmen der Suspension kann z. B. für 1 Sekunde bis 2 Stunden, bevorzugt für 10 Sekunden bis 60 Minuten und ganz besonders bevorzugt für 20 Sekunden bis 30 Minuten bei Temperaturen von 50 bis 650°C, vorzugsweise 80 bis 250°C und ganz besonders bevorzugt 120 bis 180°C erfolgen. Die Temperatur kann im angegebenen Bereich frei gewählt werden, wobei die Temperatur so gewählt werden sollte, dass sie zumindest 5°C unterhalb der Schmelz-, Zersetzungs- oder Erweichungstemperatur der als Trägermaterial verwendeten Materialien oder der in gegebenenfalls vorhandenen Zwischenschichten vorhandenen Materialien liegt. Das Erwärmen des Verbundes kann mittels erwärmter Luft, Heißluft, Infrarotstrahlung oder durch andere Erwärmungsmethoden nach dem Stand der Technik erfolgen.

In einer weiteren besonderen Ausführungsform des erfindungsgemäßen Verfahrens kann die Suspension, wenn das Sol auf Methacryloyl-oxypropyl-tri-methoxysilan (MEMO) basiert, durch Behandlung mit UV-Strahlen verfestigt wird. Die Behandlung mit UV-Strahlung kann z. B. darin bestehen, dass das Material, auf welches die Suspension aufgebracht wurde, dem Sonnenlicht oder dem Licht von speziellen UV-Lampen ausgesetzt wird. Die Behandlung mit UV-Strahlung kann z.B. durch eine UV-Lampe erfolgen, wobei die eingestrahlte Energiemenge so groß gewählt sein muss, dass eine Vernetzung der Haftvermittler stattfindet. Eine entsprechende Behandlung kann z. B. durch Bestrahlung mit einer Quecksilberdampflampe mit einer Wellenlänge von 254 nm für 0,1 bis 24 Stunden, bevorzugt 1 bis 4 Stunden erfolgen. Nach oder vor der UV-Behandlung, vorzugsweise vor der UV-Behandlung kann es vorteilhaft sein, wenn eine wie oben beschriebene Erwärmung erfolgt um eine genügend hohe Endfestigkeit zu erzielen.

Um ein ausreichend stabiles Netzwerk zu erhalten, weist die zur Herstellung der Deckschicht (2) eingesetzt Suspension vorzugsweise einen Anteil von 0,1 bis 20 Massen-%, bevorzugt von 2 bis 10 Massen-% an Haftvermittlern auf. Neben den genannten "reaktiven" Haftvermittlern kann die Suspension noch weitere Haftvermittler, ausgewählt aus den organofunktionellen Silanen, aufweisen. Diese Haftvermittler können in der Suspension ebenfalls mit einem Anteil von 0,1 bis 20 Massen-%, bevorzugt von 2 bis 10 Massen% vorliegen. Neben den Haftvermittlern können noch weitere Additive, wie z. B. 1-Methylimidazol, welches bei der Verwendung von Bisphenol A als Aktivator eingesetzt werden kann, in der Suspension vorhanden sein.

In dem erfindungsgemäßen Verfahren können auf das Trägermaterial vor dem Aufbringen der keramischen Schicht (2) als Deckschicht eine oder mehrere Zwischenschichten aufgebracht werden. Solche Zwischenschichten können z. B. einen Klebstoff einen Haftvermittler oder ein Bindemittel enthalten. Ebenfalls können solche Zwischenschichten z. B. strukturgebende Mittel, wie z. B. geschäumtes PVC oder Sägespäne, wie bei der Raufasertapete aufweisen. Auch das Aufbringen von Mustern, Photos, Text oder Zeichnungen durch Aufdrucken von Farben, kann ein Aufbringen von Zwischenschichten darstellen, weshalb Zwischenschichten auch Druckfarben aufweisen können.

In einer besonders bevorzugten Ausführungsart des erfindungsgemäßen Verfahrens wird auf das Trägermaterial vor dem Aufbringen der keramischen Beschichtung (2) eine keramische Zwischenschicht aufgebracht. Diese kann in der selben Weise wie die keramische Beschichtung hergestellt und aufgebracht werden. Zu diesem Zweck wird das einmal erfindungsgemäß behandelte Trägermaterial, auf welches eine keramische Beschichtung aufgebracht wurde, gegebenenfalls nach Aufbringen weiterer Zwischenschichten, erneut gemäß dem erfindungsgemäßen Verfahren mit einer keramischen Beschichtung ausgerüstet

In einer Variante dieser Ausführungsart des erfindungsgemäßen Verfahrens wird die Zwischenschicht durch Aufbringen und Verfestigen einer Suspension, die Partikel einer anorganischen Komponente suspendiert in einem Sol aufweist, auf das Trägermaterial oder gegebenenfalls weitere vorhandene Zwischenschichten und anschließendes Verfestigen der Suspension auf und gegebenenfalls im Trägermaterial bzw. der gegebenenfalls weiteren vorhandenen Zwischenschicht aufgebracht.

Die Suspension zur Herstellung der keramischen Zwischenschicht kann im erfindungsgemäßen Verfahren z. B. durch Aufdrucken, Aufpressen, Einpressen Aufrollen, Aufrakeln, Aufstreichen, Tauchen, Spritzen oder Aufgießen auf und gegebenenfalls in die Trägerschicht oder eine gegebenenfalls vorhandene Zwischenschicht gebracht werden.

Die zur Herstellung der Zwischenschicht verwendete Suspension weist vorzugsweise zumindest ein Sol, welches als anorganischer Kleber fungiert und zumindest Partikel einer anorganischen Komponente, die im Wesentlichen zumindest eine Verbindung aus zumindest einem Metall, zumindest einem Halbmetall oder zumindest einem Mischmetall mit zumindest einem Element der 3. bis 7 Hauptgruppe aufweist, auf. Vorzugsweise weist die Suspension Partikel zumindest eines Oxids des Aluminiums, Siliziums, Titans, Yttriums, und/oder Zirkoniums und zumindest ein Sol, der Elemente Al, Zr, Ti, Y und/oder Si auf, und wird durch Suspendieren der Partikel in zumindest einem dieser Sole hergestellt. Die Suspension kann partikuläre oder polymere Sole aufweisen. Vorzugsweise weist die Suspension ein polymeres Sol, insbesondere ein polymeres Sol einer Siliziumverbindung auf.

Die Sole können durch Hydrolisieren zumindest einer Vorläuferverbindung der Elemente Zr, Al, Ti, Y und/oder Si mit Wasser oder einer Säure oder einer Kombination dieser Verbindungen erhalten werden. Ebenso kann es vorteilhaft sein, die zu hydrolisierende Verbindung vor der Hydrolyse in Alkohol oder eine Säure oder eine Kombination dieser Flüssigkeiten zu geben. Vorzugsweise liegen die zu hydrolisierenden Verbindungen gelöst in einem wasserfreien Lösemittel, bevorzugt Alkohol, vor und werden mit dem 0,1 bis 100-fachen, bevorzugt 1- bis 5-fachen Molverhältnis an Wasser hydrolysiert.

Als zu hydrolisierende Verbindung wird vorzugsweise zumindest ein Nitrat, ein Halogenid (Chlorid), ein Carbonat oder eine Alkoholatverbindung der Elemente Zr, Al, Ti, Y und/oder Si, vorzugsweise Si hydrolisiert. Besonders bevorzugt als zu hydrolysierende Verbindungen sind Alkoxysilane, insbesondere Tetraethoxysilan (TEOS). Die Hydrolyse erfolgt vorzugsweise in Gegenwart von Wasser, Wasserdampf, Eis, oder einer Säure oder eine Kombination dieser Verbindungen.

In einer Ausführungsvariante zur Herstellung der Zwischenschicht (3) des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden.

In einer weiteren Ausführungsvariante zur Herstellung der Zwischenschicht (3) des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf Um auf den bevorzugten Anteil von Wasser und/oder wässriger Säure zu kommen, wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10-fache Menge an Wasser kann bei sehr langsam hydrolisierenden Verbindungen, wie z.B. beim Tetraethoxysilan, eingesetzt werden. Eine Hydrolyse mit weniger als der bevorzugten Menge an Wasser, Wasserdampf oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind

Zur Herstellung dieser Sole mit dem gewünschten sehr geringen Anteil an Wasser und/oder Säure im Sol ist es vorteilhaft, wenn die zu hydrolisierende Verbindung in einem organischen Lösemittel, insbesondere Ethanol, Isopropanol, Butanol, Amylalkohol, Hexan, Cyclohexan, Ethylacetat und/oder Mischungen dieser Verbindungen, gelöst wird bevor die eigentliche Hydrolyse vorgenommen wird. Ein so hergestelltes Sol kann zur Herstellung der erfindungsgemäßen Suspension oder auch als Haftvermittler in einem Vorbehandlungsschritt eingesetzt werden.

Sowohl die partikulären Sole als auch die polymeren Sole können als Sol in dem Verfahren zur Herstellung der Suspension eingesetzt werden. Neben den Solen, die wie gerade beschrieben erhältlich sind, können prinzipiell auch handelsübliche Sole, wie z. B. Silicasole (wie etwa Levasil, Bayer AG), eingesetzt werden. Das Verfahren der Herstellung der keramischen Zwischenschicht lehnt sich an an die Verfahren zur Herstellung von keramischen Membranen, welche in DE 10142 622 und in ähnlicher Form in WO 99/15262 beschrieben sind.

Es wurde gefunden, dass ein Solsystem bzw, eine Suspension, welches bzw. welche im Benetzungsverhalten das Trägermaterial bzw. das Material einer gegebenenfalls vorhandenen Zwischenschicht angepasst wurde, die Trägermaterialien, vollständig durchtränken und somit fehlerfreie Beschichtungen erhältlich sind. Bevorzugt erfolgt bei dem Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Trägermaterial anzupassen.

Es wurde festgestellt, dass die grundlegende Änderung des Solsystems und der daraus resultierenden Suspension zu einer deutlichen Verbesserung der Haftungseigenschaften der keramischen Komponenten auf und gegebenenfalls in der Trägerschicht führt. Solche guten Haftfestigkeiten sind mit partikulären Solsystemen normalerweise nicht erhältlich. Vorzugsweise werden deshalb die erfindungsgemäße eingesetzten Trägermaterialien mittels Suspensionen beschichtet, die auf polymeren Solen basieren.

Besonders bevorzugt werden zur Herstellung der keramischen Zwischenschicht (3) in dem erfindungsgemäßen Verfahren Suspensionen eingesetzt, bei denen der Massenanteil der suspendierten Komponente das 1,5 bis 150-fache, besonders bevorzugt das 5 bis 20-fache der im Sol vorhandenen Feststoffkomponente beträgt. Als zu suspendierende Komponenten können eine oder mehrere der bei der Beschreibung der Zwischenschicht genannten Sorten von Partikeln eingesetzt werden. Als zu suspendierende Komponente können insbesondere Aluminiumoxid-Partikel eingesetzt werden, die beispielweise von der Firma Martinswerke unter den Bezeichnungen *MZS 3 und MZS1* und von der Firma AlCoA unter der Bezeichnung CT3000 SG, CL3000 SG, CT1200 SG, CT800SG und HVA SG angeboten werden.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z. B. Windsichten und Hydroklassieren klassiert wurden.

Zur Verbesserung der Haftung der anorganischen Komponenten am Trägermaterial, aber auch zur Verbesserung der Haftung der später aufzubringenden keramischen Beschichtung (2) oder weiterer Zwischenschichten, kann es vorteilhaft sein, den eingesetzten Suspensionen weitere Haftvermittler, wie z. B. organofunktionelle Silane, wie z. B. die Degussa-Silane AMEO (3-Aminopropyltriethoxysilan), GLYMO (3-Glycidyloxytrimethoxysilan), MEMO (3-methacryloxypropyltrimethoxysilan), Silfin (Vinylsilan + Initiator + Katalysator), VTEO (Vinyltriethoxysilan), beizufügen. Das Beifügen von Haftvermittlern ist dabei bei Suspensionen auf Basis polymerer Sole bevorzugt. Als Haftvermittler sind allgemein gesprochen insbesondere Verbindungen, ausgewählt aus den Octylsilanen, den Vinylsilanen, den aminfunktionalisierten Silanen und/oder den Glycidyl-funktionalisierten Silanen einsetzbar.

Besonders bevorzugte Haftvermittler für Polyamide sind Aminfünktionelle Silane und für Polyester Glycidyl-funktionalisierte Silane. Auch andere Haftvermittler sind einsetzbar, die aber auf die jeweiligen Trägermaterialien abgestimmt sein müssen. Die Haftvermittler müssen dabei so ausgewählt werden, dass die Verfestigungstemperatur unterhalb des Schmelz- oder Erweichungspunktes des als Trägerschicht eingesetzten Materials und unterhalb der Zersetzungstemperatur von gegebenenfalls vorhandenen Zwischenschichtmaterialien liegt. Bevorzugt weisen erfindungsgemäße Suspensionen sehr viel weniger als 25 Gew.%, vorzugsweise weniger als 10 Gew.-% Verbindungen auf, die als Haftvermittler fungieren können. Ein optimaler Anteil an Haftvermittler ergibt sich aus der Beschichtung der Trägerschicht und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die durch das Aufbringen auf und/oder im Trägermaterial bzw. der Zwischenschicht vorhandene Suspension kann z. B. durch Erwärmen auf 50 bis 650°C, vorzugsweise 50 bis 350°C verfestigt werden. Die maximal zulässige Temperatur wird dabei von dem in der Trägerschicht bzw. in den Zwischenschichten vorhandenen Materialien bestimmt So wird je nach Ausführungsvariante des Verfahrens die auf oder im Trägermaterial vorhandene Suspension durch Erwärmen auf 80 bis 250°C und ganz besonders bevorzugt durch Erwärmen auf 120 bis 180°C verfestigt. Es kann vorteilhaft sein, wenn das Erwärmen für 1 Sekunde bis 120 Minuten bei einer Temperatur von 50 bis 350°C erfolgt. Besonders bevorzugt erfolgt das Erwärmen der Suspension zum Verfestigen auf eine Temperatur von 80 bis 250 °C, ganz besonders bevorzugt bei einer Temperatur von 120 bis 180°C und vorzugsweise für 10 Sekunden bis 60 min. Das Verfestigen durch Erwärmen der Suspension auf einem Papier mit Fasern aus Cellulose, erfolgt vorzugsweise für 0,1 bis 10 Minuten bei einer Temperatur von 120 bis 180°C, auf einem Glasfaservlies mit Fasern aus E-Glas oder S-Glas für 0,5 bis 10 Minuten bei einer Temperatur von 500 bis 550 °C und auf einem Vlies mit Fasern aus Keramik für 0,5 bis 10 Minuten bei einer Temperatur von 600 bis 650 °C. Das Erwärmen des Verbundes kann mittels erwärmter Luft, Heißluft, Infrarotstrahlung oder durch andere Erwärmungsmethoden nach dem Stand der Technik erfolgen.

In einer bevorzugten Ausführungsform Verfahrens zur Herstellung der Zwischenschicht wird zur Bildung der keramischen Zwischenschicht (3), zumindest ein Gemisch aus einem oder mehreren Oxidpartikeln und einem oder mehreren Silanen aufgebracht und anschließend durch zumindest einmaliges Erwärmen verfestigt. Bei dieser Ausführungsform wird als Gemisch eine Suspension aus einem Sol und zumindest eine Fraktion von Oxidpartikeln, vorzugsweise ausgewählt aus den Oxiden der Elemente Al, Zr, Ti, Y und/oder Si, aufweist, der vor dem Aufbringen ein Gemisch aus zumindest zwei unterschiedliche Haftvermittler, die jeweils auf einem Alkylalkoxysilan der allgemeinen Formel **IV**

Rₓ-Si(OR)₄₋ₓ (IV)

mit x = 1 oder 2 und R = organischer Rest, wobei die Reste R gleich oder unterschiedlich sein können,
basieren, wobei die Haftvermittler so gewählt werden, dass beide Haftvermittler Alkylreste aufweisen, die zumindest jeweils eine reaktive Gruppe als Substituenten aufweist, wobei die reaktive Gruppe am Alkylrest des einen Haftvermittlers mit der reaktiven Gruppe des anderen Haftvermittlers während des zumindest einmaligen Erwärmens unter Ausbildung einer kovalenten Bindung reagiert, oder ein oder mehrere Haftvermittler gemäß der Formel IV, die reaktive Gruppen aufweisen, die unter Einwirkung von UV-Strahlung unter Ausbildung einer kovalenten Bindung reagieren, zugegeben wird, wobei bei Zugabe eines Haftvermittlers der unter Einwirkung von UV-Strahlung reagiert, nach dem Aufbringen der Suspension auf das Polymervlies zumindest eine Behandlung mit UV-Strahlung erfolgt. Die Behandlung mit UV-Strahlung kann z.B. durch eine UV-Lampe erfolgen, wobei die eingestrahlte Energiemenge so groß gewählt sein muss, dass eine Vernetzung der Haftvermittler stattfindet. Eine entsprechende Behandlung kann z.B. durch Bestrahlung mit einer Quecksilberdampflampe mit einer Wellenlänge von 254 nm für 0,1 bis 24 Stunden, bevorzugt 1 bis 4 Stunden erfolgen. Die Behandlung mit UV-Strahlung kann vor oder nach dem zumindest einmaligen Erwärmen erfolgen. Vorzugsweise erfolgt die W-Behandlung nach dem Aufbringen der Suspension auf die Trägerschicht (1) bzw. die gegebenenfalls vorhandenen Zwischenschichten und vor dem einmaligen Erwärmen der Suspension zur Verfestigung derselben. Besonders bevorzugt erfolgt die Behandlung mit UV-Strahlung nach einem ersten Erwärmen der auf die Trägerschicht/Zwischenschicht aufgebrachten Suspension, welches der Antrocknung/Vortrocknung der Suspension dient und vor einem zweiten Erwärmen, mit welchem die Suspension verfestigt wird. Das Vortrocknen kann z. B. bei einer Temperatur von 50 bis 90°C, vorzugsweise von 60 bis 85°C, vorzugsweise für eine Dauer von 0,1 bis 3 Stunden, bevorzugt für eine Dauer von 0,5 bis 1,5 Stunden, erfolgen. Das Erwärmen zur Verfestigung der Suspension kann in dem oben genannten Temperaturbereich durchgeführt werden.

Als Haftvermittler sind prinzipiell alle Haftvermittler einsetzbar, die der oben genannten Formel **IV** genügen und bei denen zumindest zwei Haftvermittler jeweils einen Alkylrest aufweisen, der in der Lage ist in einer chemischen Reaktion mit dem Alkylrest des anderen Haftvermittlers eine kovalente Bindung aufzubauen. Grundsätzlich kommen alle chemischen Reaktionen in Frage, vorzugsweise ist die chemische Reaktion aber eine Additions- oder Kondensationsreaktion. Die Haftvermittler können dabei jeweils zwei oder einen Alkylrest aufweisen (x in Formel **IV** gleich 1 oder 2). Bevorzugt weisen die im erfindungsgemäßen Verfahren eingesetzten Haftvermittler mit einer reaktiven Gruppe am Alkylrest nur einen Alkylrest auf (x = 1). Im erfindungsgemäßen Verfahren können als zumindest zwei Haftvermittler z. B. ein eine Aminogruppe am Alkylrest und ein eine Glycidyl-Gruppe am Alkylrest aufweisende Haftvermittler eingesetzten werden. Besonders bevorzugt werden im erfindungsgemäßen Verfahren als Haftvermittler 3-Aminopropyltriethoxysilan (AMEO) und 3-Glycidyloxytrimethoxysilan (GLYMO)-eingesetzt Vorzugsweise-beträgt das molare Verhältnis der beiden Haftvermittler zueinander von 100 zu 1 bis 1 zu 100, bevorzugt von 2 zu 1 bis 1 zu 2 und ganz besonders bevorzugt ca. 1 zu 1. Als UV-aktiver Haftvermittler, der unter Einwirkung von UV-Strahlung eine kovalente Bindung zwischen den Haftvermittlermolekülen ausbildet, wird vorzugsweise Methacryloxypropyltrimethoxysilan (MEMO) eingesetzt. Die Haftvermittler sind z. B. bei der Degussa AG zu beziehen.

Um ein ausreichend stabiles Netzwerk zu erhalten, weist die zur Herstellung der keramischen Zwischenschicht (3) eingesetzt Suspension vorzugsweise einen Anteil von 0,1 bis 20 Massen-%, bevorzugt von 2 bis 10 Massen-% an Haftvermittlern auf. Neben den genannten "reaktiven" Haftvermittlern kann die Suspension noch weitere Haftvermittler, ausgewählt aus den organofunktionellen Silanen, aufweisen. Diese Haftvermittler können in der Suspension ebenfalls mit einem Anteil von 0,1 bis 20 Massen-%, bevorzugt von 2 bis 10 Massen-% vorliegen.

Das Verfahren zur Herstellung dieses ersten Verbundes aus Trägermaterial und Zwischenschicht kann z. B. so durchgeführt werden, dass das Material, welches die Trägermaterial bildet und welches gegebenenfalls schon weitere Zwischenschichten aufweist, von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und/oder in die Trägerschicht bringt, wie z. B. eine Walze, eine Spritze oder eine Rakel, und zumindest eine weitere Apparatur, welche das Verfestigen der Suspension auf und/oder in der Trägerschicht durch Erwärmen ermöglicht, wie z. B. ein elektrisch beheizter Ofen durchläuft und der so hergestellte Verbund auf einer zweiten Rolle aufgerollt wird. Auf diese Weise ist es möglich, diesen Verbund im Durchlaufverfahren herzustellen.

An verschiedenen Stellen des erfindungsgemäßen Verfahrens können Farbgebungsschritte und Verzierungsschritte durchgeführt werden. So ist es möglich, die Trägerschicht und/oder die Zwischenschicht(en) einzufärben. Dazu können alle gängigen, handelsüblichen Farben und Verfahren, z. B. Siebdruck, Tintenstrahldruck oder Tiefdruckverwendet werden. Es ist auch möglich, die erfindungsgemäßen Wandverideidungsverbunde zu strukturieren, d.h. ihnen eine dreidimensionale Oberfläche zu verleihen. So können z. B. als Zwischenschicht Lagen von Sägemehl oder ähnlichen strukturgebenden Materialien vorgesehen sein und somit aufgebracht werden. Diese Zwischenschichten weisen die üblichen Kleber/Bindermaterialien auf, mit denen die Partikel an das darunter liegende Material gebunden werden kann. Auch Schichten, die durch Aufschäumen erhalten werden können, wie z. B. Vinylschaumschichten, können als Zwischenschichten nach dem Stand der Technik aufgebracht werden. Das geschäumten Schichten können z. B. durch die Zugabe einer gasabspaltenden Verbindung wie z. B. Carbonate, Hydrogencarbonate oder Azoverbindungen, oder aber durch das Einblasen von Gasen erhalten werden.

Wie bereits ausgeführt, kann es vorteilhaft sein, wenn zwischen den Schichten (1) und (2) und/oder (2) und (3) oder innerhalb des Trägermaterials (1) weitere Zwischenschichten aufgebracht werden. Die Zwischenschichten können z.B. einen Klebstoff oder einen Haftvermittler oder ein Bindemittel enthalten. Ebenso können die Zwischenschichten Pigmente, Farbstoffe oder ähnliches aufweisen, welche zur Einfärbung oder zur Wiedergabe von Mustern, Schriftzeichen und Grafiken oder Photos geeignet sind. Die Zwischenschichten können durchgehend sein oder ausschließlich an den Stellen der darunter liegenden Schicht vorhanden sein, an denen ein Muster, Bild oder Zeichen wiedergegeben werden soll oder eine Struktur vorhanden sein soll.

Im einfachsten Fall können die darstellenden Zwischenschichten durch handelsübliche Drucker aufgebracht werden. So kann das Aufbringen mit einem Tintenstrahldrucker oder mit einem Drucker, der nach dem Thermotransferverfahren arbeitet, erfolgen. Mit solchen Druckern können nicht nur Farben oder Pigmente aufgebracht werden sondern auch Bindemittel, Kleber oder Haftvermittler.

Die einzelnen Schichten der erfindungsgemäßen Wandverkleidungsverbunde können in einem Rolle-zu-Rolle Verfahren aufgebracht werden. Unter einem Rolle-zu-Rolle Verfahren wird im Rahmen der vorliegenden Erfindung ein Verfahren verstanden, bei dem ein Trägermaterial von einer Rolle abgerollt wird, in einem Durchlaufverfahren eine oder mehrere Schichten aufgebracht werden und das fertige Produkt, oder auch Zwischenprodukte, auf eine zweite Rolle aufgewickelt werden können. Die Herstellung der erfindungsgemäßen Tapeten durch ein Rolle-zu-Rolle Verfahren hat den Vorteil, dass das fertige Produkt bereits in Rollenform vorliegt, wie es üblicherweise verarbeitet wird.

Das Verfahren zur Herstellung des erfindungsgemäßen Wandverkleidungsverbundes kann z. B. so durchgeführt werden, dass das Trägermaterial (1) von einer Rolle abgerollt wird, mit einer Geschwindigkeit von 1 m/h bis 2 m/s, vorzugsweise mit einer Geschwindigkeit von 0,5 m/min bis 20 m/min und ganz besonders bevorzugt mit einer Geschwindigkeit von 1 m/min bis 5 m/min durch zumindest eine Apparatur, welche die Suspension zur Herstellung der keramischen Beschichtung (2) auf und gegebenenfalls in das Trägermaterial (1) bringt, wie z. B. eine Walze, eine Spritze oder eine Rakel, und zumindest eine weitere Apparatur, welche das Verfestigen der Suspension auf und in dem Trägermaterial durch Erwärmen ermöglicht, wie z. B. ein elektrisch beheizter Ofen durchläuft und der so hergestellte Verbund auf einer zweiten Rolle aufgerollt wird. In einer besonders bevorzugten Ausführungsform sind weitere Apparaturen zum Aufbringen, Verteilen und Erwärmen oder Erwärmen und Verteilen sowie zum Abkühlen vorhanden, so dass in einem einzigen Schritt zunächst die keramische Zwischenschicht oder gegebenenfalls vorher oder nachher weitere Zwischenschichten aufgebracht werden, und anschließend die keramische Beschichtung/Deckschicht (2) aufgebracht wird, bevor der Verbund auf der zweiten Rolle aufgewickelt wird. Auf diese Weise ist es möglich, die Tapete einfach im Durchlaufverfahren herzustellen.

Das erfindungsgemäße Verfahren kann auch zeitlich und räumlich getrennt durchgeführt werden. So ist es möglich zunächst die Trägerschicht (1) mit der keramischen Zwischenschicht (3) und gegebenenfalls einer oder mehrerer Zwischenschichten zwischen der Schicht (1) und der Zwischenschicht (3) und gegebenenfalls auch auf der keramischen Zwischenschicht (3) herzustellen. Dieses Zwischenprodukt kann dann in einer Druckerei mit (einer) weiteren Zwischenschicht, der Druckschicht oder bei Mehrfarbendruck den Druckschichten ausgerüstet werden. Der Druck kann dabei auf für die Tapetenherstellung bekannten Maschinen und nach den dort bekannten Verfahren erfolgen. Anschließend an diesen Verfahrensschritt wird die erfindungsgemäße keramische Beschichtung/Deckschicht (2) nach einem der oben genannten Verfahren auf den bedruckten Verbund aufgebracht, um zum erfindungsgemäßen Wandverkleidungsverbund zu gelangen.

Die erfindungsgemäßen Wandverkleidungsverbunde können auf allen Untergründen aufgebracht und in allen Bereichen des Bauwesens, insbesondere im Bereich des Innenausbaus eingesetzt werden. Auf Grund der guten Temperatur- und Chemikalienbeständigkeit ist auch ein Einsatz in Bereichen mit erhöhten Sicherheitsanforderungen wie z.B. Laboratorien möglich. Gut geeignet sind die erfindungsgemäßen Wandverkleidungsverbunde auch in den Fällen, in denen ein bestimmtes Brandverhalten oder Reinigungsverhalten gewünscht wird, wie z.B. in öffentlichen Verkehrsmitteln.

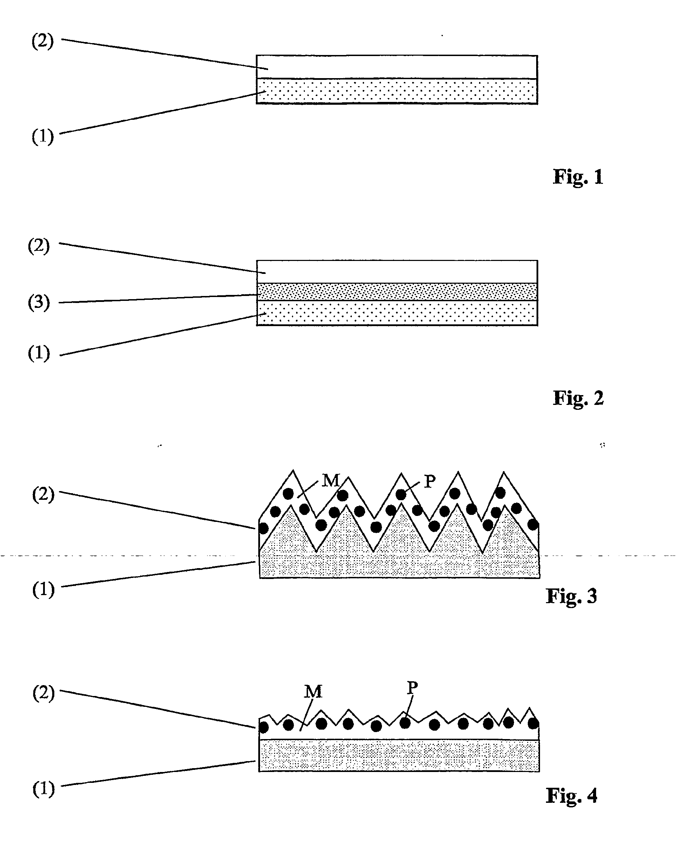

In Fig. 1 wird beispielhaft der Aufbau eines erfindungsgemäßen Wandverkleidungsverbunds dargestellt. Auf einem Trägermaterial (1) ist eine keramische Beschichtung (2) als Deckschicht vorhanden.

In Fig. 2 wird beispielhaft der Aufbau eines erfindungsgemäßen Wandverkleidungsverbunds dargestellt. Auf einem Trägermaterial (1) ist eine keramische Zwischenschicht (3) vorhanden.
Auf dieser ist eine dritte Schicht, die Deckschicht bzw. keramische Beschichtung (2), die im Normalfall die oberste Schicht des Verbunds bildet, vorhanden.

In Fig. 3 wird schematisch ein Schnitt durch die Oberfläche eines erfindungsgemäßen Wandverkleidungsverbundes dargestellt, bei dem die Oberflächenstruktur durch die Struktur des Trägermaterials und nicht durch die Partikel (P) in der Matrix (M) der Deckschicht (2) gebildet wird.

In Fig. 4 wird schematisch ein Schnitt durch die Oberfläche eines erfindungsgemäßen Wandverkleidungsverbundes dargestellt, bei dem die Oberflächenstruktur nicht durch die Struktur des Trägermaterials sondern durch die Partikel (P) in der Matrix (M) der Deckschicht (2) gebildet wird.

Die vorliegende Erfindung wird durch die nachfolgenden Beispiele näher erläutert, ohne dass der Schutzbereich, der sich aus den Ansprüchen und der Beschreibung ergibt, durch die Beispiele eingeschränkt sein soll.

### Beispiel 1: Herstellung einer Deckschicht (2)

### Komponente 1:

224 g Dynasylan GLYEO, Degussa AG, wurden in einem 1000 ml Becherglas vorgelegt. Unter Rühren bei Raumtemperatur auf einer Magnetrührplatte mittels eines Magnetrührstäbchens wurden 20 g einer 1 Gew.-%igen Salzsäure zugeben und so lange gerührt bis die Lösung klar wurde. Unter weiterem Rühren bei 400 U/min wurden 325,6 g einer 15 Gew.-%igen Dispersion von Aerosil R812S (Degussa AG) in Ethanol zugegeben. Die erste Komponente war damit gebrauchsfertig

### Komponente 2:

190 g Dynasylan AMEO (Degussa AG).

### Herstellung der gebrauchsfertigen Suspension:

Komponente 2 wurde mittels eines Tropftrichters über einen Zeitraum von 20 min. unter stetigem Rühren langsam der Komponente 1 zugetropft. Die Suspension ist jetzt für die Verarbeitung bereit. Die Topfzeit betrug 9 Tage bei Raumtemperatur

### Verarbeitung:

Die gebrauchsfertige Suspension wurde mittels eines Handziehrahmens (Mathis) zu jeweils 25 µm auf eine Tapetengrundlage (Papiervlies mit ca. 10 Gew.%igem Anteil an PET) oder ein PET-Vlies der Firma Freudenberg mit einer Dicke von 220µm und einem Flächengewicht von 50 g/m² (PET FFKH 7210) aufgerakelt und anschließend für 30 Minuten bei 120°C (Tapetengrundlage) bzw. 140 °C (PET-Vlies) erwärmt. An dem so erhaltenen Wandverkleidungsverbund sind dann Materialuntersuchungen vorgenommen worden.

### Beispiel 2: Herstellung einer Deckschicht (2)

### Komponente 1:

226,09 g Dynasylan GLYMO, Degussa AG, wurden in einem 500 ml Becherglas vorgelegt. Unter Rühren mit Magnetrührplatte und Magnetrührstäbchen wurden- 11,46g einer 1 Gew.-%igen Salzsäure zugeben.

### Komponente 2:

Es wurden 87 g Bisphenol A vorgelegt. Unter weiterem Rühren bei 400 U/min wurden 9,65 g Aerosil R812S (Kieselsäure der Degussa AG) zugegeben. Dieser Ansatz wurde abgedeckt und für 20 Stunden gerührt. Unter Rühren wurden 7,63 g 1-Methylimidazol als Aktivator langsam zugegeben.

### Herstellung der gebrauchsfertigen Suspension:

Komponente 2 wurde über einen Zeitraum von 20 min. unter stetigem Rühren langsam der Komponente 1 zugegeben. Die Suspension ist jetzt für die Verarbeitung bereit. Die Topfzeit betrug 4 Tage bei +4°C.

### Verarbeitung:

Die Verarbeitung erfolgte wie in Beispiel 1

### Beispiel 3: Herstellung einer keramischen Schicht (3)

67,5 g Aluminiumoxid CT 3000 SG (AlCoA), 7,5 g Ethanol, 15 g Salpetersäure, 5 Gew.%ig, 0,05 g 2-(2-(2-methoxyethoxy)ethoxy)essigsäure (TODS), 1,25 g Tetraethoxysilan (TEOS), 2,5 g GLYMO und 1,25 g Methyltriethoxysilan (MTES) werden bei Raumtemperatur und 400 Umdrehungen pro Minute U/min auf einer Magnetrührplatte 24 Stunden vermischt. Die so erhaltene Suspension wurde in einer Dicke von 50 µm auf das PET Vlies gemäß Beispiel 1 aufgerakelt und der so erhaltene Verbund wurde für 30 Minuten bei 130°C erwärmt.

### Beispiel 4: Herstellung eines Verbundes der sowohl eine keramischen Schicht (3) als auch eine Deckschicht (2) aufweist

Der gemäß Beispiel 3 erhaltene Verbund aus Trägermaterial (1) und keramischer Schicht (3) wurde als Trägermaterial in einem Verfahren gemäß Beispiel 1 verwendet und so mit einer Deckschicht (2) versehen.

### Beispiel 5: Herstellung eines Verbundes der sowohl eine keramischen Schicht (3) als auch eine Deckschicht (2) aufweist

Der gemäß Beispiel 3 erhaltene Verbund aus Trägermaterial (1) und keramischer Schicht (3) wurde als Trägermaterial in einem Verfahren gemäß Beispiel 2 verwendet und so mit einer Deckschicht (2) versehen.

### Vergleichsbeispiel (Topfzeit):

226,09 g GLYMO, 87 g Bisphenol A, 11,46 g Salzsäure 1%ig, 9,56 g Aerosil R972, 7,63 g 1-Methylimidazol und 7,63 g MEMO werden innig gemischt. Die Topfzeit betrug bei Raumtemperatur weniger als 1 Tag.

Mit einigen der in den Beispielen 1 bis 4 erhaltenen Wandverkleidungsverbunden wurden diverse Tests durchgeführt.

### Bleistifthärtetest nach EN 13523-4

Es wurde ein Bleistifthärtetest gemäß EN 13523-4 durchgeführt. Über die Härte der verwendeten Bleistifte wurde bestimmt, welche mechanische Reibebelastung die Verbunde aushalten. Die in der nachfolgenden Tabelle 1 angegebenen Härtegrade entsprechen den Bleistifthärten, bei denen weder ein Verkratzen der Oberfläche, noch eine Zerstörung des Trägermaterials beobachtet wurde. Die verwendeten Bleistifte unterschiedlicher Härte werden, sortiert von weich nach hart, mit 8B, 7B, 6B, 5B, 4B, 3B, 2B, B, HB, F, H, 2H, 3H, 5H, 6H, 7H, 8H und 9H bezeichnet.

**Tabelle 1: Ergebnis des Bleistifthärtetests nach EN 13523-4**

| **Trägermaterial** | **Keramische Schicht (3)** | **Deckschicht (2) gemäß Beispiel** | **Härtegrad bis zur Beschädigung der Oberfläche** |
|---|---|---|---|
| PET-Vlies (Beispiel 3) | ja | ohne | 4B |
| PET-Vlies (Beispiel 4) | ja | 1 | B |
| PET-Vlies (Beispiel 5) | ja | 2 | 8H |
| Tapetengrundlage | ohne | ohne | B |
| Tapetengrundlage (Beispiel 2) | ohne | 2 | 8H |

Bei dem Bleistifthärtetest nach EN 13523-4 hat sich gezeigt, das eine Deckbeschichtung mit dem 2-Komponentensystem, gemäß Beispiel 2 die Obertlächenbeständigkeit gegenüber Kratzbelastungen gemäß dem Bleistifthärtetest deutlich verbessert.

### Test zur Flächenbeflammung gemäß DIN 53 438 Teil 3

### Beurteilung:

F1: Die obere Messmarke wird von der Flammenspitze des brennenden Probekörpers nicht erreicht (der Probekörper verlischt zuvor)
F2: Die Flammenspitze des brennenden Probekörpers erreicht die obere Messmarke in 20 Sekunden oder später
F3: Die Flammenspitze des brennenden Probekörpers erreicht die obere Messmarke in weniger als 20 Sekunden.

### Ergebnis des Tests des Brandverhaltens:

Ein nicht beschichtetes PET Vlies, 220µ Dicke, 50 g/m² von Freudenberg (PET FFKH 7210) schmilzt während der Beflammung und ist somit mit F3 zu bewerten.
Ein PET-Vlies mit keramischer Schicht (3) gemäß Beispiel 3 zeigt eine Lochbildung im Flammbereich jedoch kein Nachbrennen und ist somit mit F1 zu bewerten.
Ein PET-Vlies mit keramischer Schicht (3) und einer Deckschicht (2) gemäß Beispiel 4 zeigt eine Lochbildung im Flammbereich aber ebenfalls kein Nachbrennen und ist somit ebenfalls mit F1 zu bewerten. : F1 (Lochbildung im Flammbereich, jedoch kein Nachbrennen.

Den vorgenannten Tests kann entnommen werden, dass erfindungsgemäße Wandverkleidungsverbunde, die eine keramische Beschichtung als Deckschicht aufweisen, eine Oberfläche aufweisen, die sich durch eine gute Kratzfestigkeit und ein gutes Brandverhalten (schlechte Entflammbarkeit) auszeichnen.

## Patentansprüche

1. Wandverkleidungsverbund aufweisend
ein Trägermaterial (1) und zumindest eine keramische Beschichtung (2), die keramische Partikel, ausgewählt aus den Oxiden, Nitriden, Boriden oder Carbiden der Metalle oder Halbmetalle, eingebettet in eine Matrix, die aus einem Silizium ausweisenden Netzwerk besteht, welches durch Si-O-Si-Brücken verknüpft ist, aufweist, Wobei
eine oder mehrere Zwischenschichten (3) zwischen dem Trägermaterial (1) und der keramischen Schicht (2) vorhanden sind, und
die keramische Zwischenschicht (3) durch zumindest einen anorganischen Kleber untereinander und mit der unter der keramischen Zwischenschicht (3) vorhandenes Schicht verbundene Partikel einer anorganischen Komponente, die im wesentlichen zumindest eine Verbindung aus zumindest einem Metall, zumindest einem Halbmetall oder zumindest einem Mischmetall mit zumindest einem Element der 3. bis 7 Hauptgruppe aufweist, enthält

2. Wandverkleidungsverbund gemäß Anspruch 1,
dass das Trägermaterial ein Vlies, ein Gewebe, ein Gewirke, ein Filz, eine Folie, ein Papier, wobei das Papier ein- oder mehrschichtiges Papier sein kann, oder eine Tapete ist.

3. Wandverkleidungsverbund gemäß Anspruch 1 oder 2,
**dadurch gekennzeichnet,**
**dass** das Trägermaterial ein überwiegend Cellulose-, Polymer-, Glas-, Metall- oder Keramikfasern aufweisendes Flächengebilde oder eine Polymerfolie ist.

4. Wandverkleidungsverbund nach zumindest einem der Ansprüche 1 bis 3,
**dadurch gekennzeichnet,**
**dass** das Silizium aufweisende Netzwerk organische Reste aufweist, die an das Silizium gebunden sind.

5. Wandverkleidungsverbund gemäß Anspruch 4,
**dadurch gekennzeichnet,**
**dass** jeweils zwei organische Reste über kovalente Bindungen verbunden sind.

6. Wandverkleidungsverbund nach zumindest einem der Ansprüche bis 5,
**dadurch gekennzeichnet, dass** die keramische Beschichtung (2). Partikel mit einer mittleren Partikelgröße der Elementarteilchen von 1 nm bis 1 µm aufweisen.

7. Wandverkleidungsverbund nach zumindest einem der Ansprüche 1 bis 6,
**dadurch gekennzeichnet,**
**dass** die keramische Beschichtung (2) Partikel von Oxiden der Elemente Al, Zr, Si, Ti, Ce oder Fe aufweist.

8. Wandverkleidungsverbund nach zumindest einem der Ansprüche 1 bis 7,
**dadurch gekennzeichnet,**
**dass** die keramischer Beschichtung (2) als Partikel POSS-Cluster oder hydrophobierte. Kieselsäuren aufweist.

9. Wandverkleidungsverbund nach zumindest einem der Ansprüche 1 bis 8,
**dadurch gekennzeichnet,**
**dass** die keramische Beschichtung (2) eine Dicke von kleiner 100 µm aufweist.

10. Wandverkleidungsverbund nach einem der Ansprüche bis 9,
**dadurch gekennzeichnet,**
**dass** die keramische Beschichtung (2) durchlässig ist für elektromagnetische Strahlung mit einer Wellenlänge im Bereich des sichtbaren Lichts.

11. Wandverkleidungsverbund nach einem der Ansprüche 1 bis 10,
**dadurch gekennzeichnet,**
**dass** die keramische Zwischenschicht (3) Partikel von Oxiden ausgewählt aus Al₂O₃, ZrO₂, TiO₂ und/oder SiO₂ mit einer mittleren Partikelgröße von 200 nm bis 5 µm und ein Silizium aufweisendes Netzwerk aufweist, wobei das Silizium des Netzwerks über Sauerstoffatome an die Oxide der keramischen Beschichtung, über organische Reste an die unter der Deckschicht liegende Schicht und über zumindest eine, Kohlenstoffatome aufweisende Kette an ein weiteres Silizium gebunden ist.

12. Wandverkleidungsverbund nach einem der Ansprüche 1 bis 11,
**dadurch gekennzeichnet,**
**dass** eine Zwischenschicht vorhanden ist, die eine oder mehrere Komponenten, ausgewählt aus Klebern, Haftvermittlern, Bindemitteln, Farbstoffen und Pigmenten enthält

13. Wandverkleidungsverbund nach zumindest einem der Ansprüche 1 bis 12,
**dadurch gekennzeichnet,**
**dass** der Wandverkleidungsverbund flexibel ist und sich zu einer Rolle aufwickeln lässt.

14. Verfahren zur Herstellung eines Wandverkleidungsverbunds gemäß einem der Ansprüche 1 bis 13,
**dadurch gekennzeichnet,**
**dass** zur Herstellung einer abschließenden keramischen Beschichtung (2) auf ein Trägermaterial (1) nach Aufbringen einer oder mehrere Zwischenschichten (3) eine Suspension, die keramische Partikel, suspendiert in einem polymeren Sol, hergestellt durch Mischen zumindest eines Silans mit einem Alkohol und einer Säure, aufgebracht wird und anschließend verfestigt wird, wobei
die Zwischenschicht (3) durch Aufbringen und Verfestigen einer Suspension, die Partikel einer anorganischen Komponente suspendiert in einem Sol aufweist, auf das Trägemiaterial (1) oder gegebenenfalls weitere vorhandene Zwischenschichten (3) und anschließendes Verfestigen der Suspension auf und gegebenenfalls im Trägermaterial (1) bzw. der gegebenenfalls weiteren vorhandenen Zwischenschicht (3) aufgebracht wird, und
die zur Herstellung der Zwischenschicht (3) verwendete Suspension zumindest ein Sol, welches als anorganischer Kleber fungiert und zumindest Partikel einer anorganischen Komponente, die im Wesentlichen zumindest eine Verbindung aus zumindest einem Metall, zumindest einem Halbmetall oder zumindest einem Mischmetall mit zumindest
einem Element der 3. bis 7 Hauptgruppe aufweist, aufweist.

15. Verfahren nach Anspruch 14,
**dadurch gekennzeichnet,**
**dass** als keramische Partikel Oxide, Carbide, Nitride oder Boride von Metallen oder Halbmetallen eingesetzt werden.

16. Verfahren nach Anspruch 14 oder 15,
**dadurch gekennzeichnet,**
**dass** die Suspension, wenn das Sol auf Tetraethoxysilan (TEOS), 3-Glycidyloxytrimethoxysilan (GLYMO) und/oder 3-Glycidyloxytriethoxysilan (GLYEO) und/oder 3-Methacryloxypropyltrimethoxysilan (MEMO) basiert, durch Erwarmenverfestigtwird.

17. Verfahren nach Anspruch 16,
**dadurch gekennzeichnet,**
**dass** eine Suspension eingesetzt wird, die Di- oder Polyole aufweist

18. Verfahren nach Anspruch 16 oder 17,
**dadurch gekennzeichnet,**
**dass** die Suspension in zwei Schritten hergestellt wird, wobei im ersten Schritt zunächst eine Mischung von einem ersten Silan, Alkohol und Säure hergestellt wird, in welche die Partikel eingerührt werden und in einem zweiten Schritt dieser ersten Komponente als zweite Komponente ein weiteres Silan und/oder ein Diol oder Polyol zugesetzt wird, bevor die Suspension erwärmt wird.

19. Verfahren nach Anspruch 18,
**dadurch gekennzeichnet,**
**dass** die Suspension in zwei Schritten hergestellt wird, wobei im ersten Schritt zunächst eine Mischung von GLYEO, Alkohol und Säure hergestellt wird, in welche die Partikel eingerührt werden und in einem zweiten Schritt dieser ersten Komponente als zweite Komponente 3-Aminopropyltriethoxysilan (AMEO) und/oder Bisphenol A zugesetzt wird, bevor die Suspension erwärmt wird.

20. Verfahren nach zumindest einem der Ansprüche 16 bis 19,
**dadurch gekennzeichnet,**
**dass** das Erwärmen für 1 Sekunde bis 2 Stunden bei Temperaturen von 50 bis 650 °C erfolgt.

21. Verfahren nach Anspruch 14 oder 15,
**dadurch gekennzeichnet,**
**dass** die Suspension, wenn das Sol auf Methacryloyl-oxypropyl-tri-methoxysilan (MEMO) basiert, durch Behandlung mit UV-Strahlen verfestigt wird.

22. Verfahren nach zumindest einem der Ansprüche 14 bis 21,
**dadurch gekennzeichnet,**
**dass** eine Zwischenschicht aufgebracht wird, die einen Klebstoff, einen Haftvermittler, einen Farbstoff, Druckfarben oder ein Bindemittel enthält.

23. Verfahren nach zumindest einem der Ansprüche 14 bis 22,
**dadurch gekennzeichnet, dass** die einzelnen Schichten in einem Rolle-zu-Rolle Verfahren auf das Trägermaterial aufgebracht werden.

## Claims

1. Wallcovering assembly comprising a base material (1) and at least one ceramic coating (2) comprising ceramic particles selected from the oxides, nitrides, borides or carbides of the metals or semimetals embedded in a matrix consisting of a silicon network linked together by Si-O-Si bridges, one or more interlayers (3) being present between the base material (1) and the ceramic layer (2), and the ceramic interlayer (3) containing particles of an inorganic component which comprises essentially at least one compound from at least one metal, at least one semimetal or at least one mixed metal with at least one element of the 3rd to 7th main group that are bonded by at least one inorganic adhesive to each other and to the layer present underneath the ceramic interlayer (3).

2. Wallcovering assembly according to Claim 1, **characterized in that** the base material is a nonwoven, a woven, a formed-loop knit, a felt, a film, a paper, which paper can be single- or multi-layered paper, or a wallpaper.

3. Wallcovering assembly according to Claim 1 or 2, **characterized in that** the base material is a sheetlike structure comprising predominantly cellulose fibers, polymeric fibers, glass fibers, metal fibers or ceramic fibers, or is a polymeric film.

4. Wallcovering assembly according to at least one of Claims 1 to 3, **characterized in that** the silicon network comprises organic radicals which are bound to silicon.

5. Wallcovering assembly according to Claim 4, **characterized in that** in each case two organic radicals are bound together via covalent bonds.

6. Wallcovering assembly according to at least one of Claims 1 to 5, **characterized in that** the ceramic coating (2) comprises particles having an average particle size from 1 nm to 1 µm for the elementary particles.

7. Wallcovering assembly according to at least one of Claims 1 to 6, **characterized in that** the ceramic coating (2) comprises particles of oxides of the elements A1, Zr, Si, Ti, Ce or Fe.

8. Wallcovering assembly according to at least one of Claims 1 to 7, **characterized in that** the ceramic coating (2) comprises POSS clusters or hydrophobicized silicas as particles.

9. Wallcovering assembly according to at least one of Claims 1 to 8, **characterized in that** the ceramic coating (2) is less than 100 µm in thickness.

10. Wallcovering assembly according to any one of Claims 1 to 9, **characterized in that** the ceramic coating (2) is transparent to electromagnetic radiation having a wavelength in the region of visible light.

11. Wallcovering assembly according to any one of Claims 1 to 10, **characterized in that** the ceramic interlayer (3) comprises particles of oxides selected from Al₂O₃, Zr0₂, Ti0₂ and/or Si0₂ having an average particle size from 200 nm to 5 µm and a silicon network, the silicon of the network being bonded via oxygen atoms to the oxides of the ceramic coating, via organic radicals to the layer underneath the top layer and via at least one chain of carbon atoms to a further silicon.

12. Wallcovering assembly according to any one of Claims 1 to 11, **characterized in that** there is an interlayer which contains one or more components selected from adhesives, adhesion promoters, binders, dyes and pigments.

13. Wallcovering assembly according to at least one of Claims 1 to 12, **characterized in that** the wallcovering assembly is flexible and can be wound up into a roll.

14. Process for producing a wallcovering assembly according to any one of Claims 1 to 13, **characterized in that** a final ceramic coating (2) is produced by a suspension comprising ceramic particles suspended in a polymeric sol produced by mixing at least one silane with an alcohol and an acid being applied to a base material (1) after application of one or more interlayers (3) and subsequently solidified, the interlayer (3) being applied by applying and solidifying a suspension which comprises particles of an inorganic component suspended in a sol to the base material (1) or further interlayers (3) optionally present and subsequently solidifying the suspension on and optionally in the base material (1) or the further interlayer (3) optionally present, and the suspension used for producing the interlayer (3) comprising at least one sol, which acts as an inorganic adhesive and comprises at least particles of an inorganic component which comprises essentially at least one compound of at least one metal, at least one semimetal or at least one mixed metal with at least one element of the 3rd to 7th main group.

15. Process according to Claim 14, **characterized in that** oxides, carbides, nitrides or borides of metals or semimetals are used as ceramic particles.

16. Process according to Claim 14 or 15, **characterized in that** the suspension is solidified by heating when the sol is based on tetraethoxysilane (TEOS), 3-glycidyloxytrimethoxysilane (GLYMO) and/or 3-glycidyloxytriethoxysilane (GLYEO) and/or 3-methacryloyloxypropyltrimethoxysilane (MEMO).

17. Process according to Claim 16, **characterized in that** a suspension comprising di- or polyols is used.

18. Process according to Claim 16 or 17, **characterized in that** the suspension is produced in two steps, a first step of initially producing a mixture of first silane, alcohol and acid, into which mixture the particles are stirred, and a second step of adding to this first component a further silane and/or a diol or polyol as a second component before the suspension is heated.

19. Process according to Claim 18, **characterized in that** the suspension is produced in two steps, a first step of initially producing a mixture of GLYEO, alcohol and acid, into which mixture the particles are stirred, and a second step of this first component having added to it 3-aminopropyltriethoxysilane (AMEO) and/or bisphenol A as a second component before the suspension is heated.

20. Process according to at least one of Claims 16 to 19, **characterized in that** the heating takes 1 second to 2 hours at temperatures from 50 to 650°C.

21. Process according to Claim 14 or 15, **characterized in that** the suspension is solidified by treatment with UV rays when the sol is based on methacryloyloxypropyltrimethoxysilane (MEMO).

22. Process according to at least one of Claims 14 to 21, **characterized in that** an interlayer containing an adhesive, an adhesion promoter, a dye, printing inks or a binder is applied.

23. Process according to at least one of Claims 14 to 22, **characterized in that** the individual layers are applied to the base material in a roll-to-roll process.

## Revendications

1. Revêtement mural composite, comprenant
un matériau support (1) et au moins un revêtement céramique (2) qui comporte des particules céramiques choisies parmi les oxydes, les nitrures, les borures ou les carbures des métaux ou des semi-métaux, incorporées dans une matrice constituée d'un réseau comportant du silicium, qui est relié par des ponts Si-O-Si,
une ou plusieurs couches intermédiaires (3) étant présentes entre le matériau support (1) et la couche céramique (2) et
la couche intermédiaire céramique (3) contenant des particules, reliées les unes aux autres et avec la couche présente sous la couche intermédiaire céramique (3) par au moins un adhésif inorganique, d'un composant inorganique qui comporte essentiellement au moins un composé d'au moins un métal, d'au moins un semi-métal ou d'au moins un métal mixte avec au moins un élément des groupes principaux 3 à 7.

2. Revêtement mural composite selon la revendication 1, **caractérisé en ce que** le matériau support est un non-tissé, un tissu, un tricot, un feutre, un film, un papier, le papier pouvant être un papier mono- ou multicouche, ou une tapisserie.

3. Revêtement mural composite selon la revendication 1 ou 2, **caractérisé en ce que** le matériau support est une structure plate comportant en majorité des fibres cellulosiques, polymères, de verre, métalliques ou céramiques ou un film polymère.

4. Revêtement mural composite selon au moins l'une quelconque des revendications 1 à 3, **caractérisé en ce que** le réseau comportant du silicium comporte des radicaux organiques qui sont reliés au silicium.

5. Revêtement mural composite selon la revendication 4, **caractérisé en ce que** deux radicaux organiques sont à chaque fois reliés par des liaisons covalentes.

6. Revêtement mural composite selon au moins l'une quelconque des revendications 1 à 5, **caractérisé en ce que** le revêtement céramique (2) comporte des particules d'une taille de particule moyenne des particules élémentaires de 1 nm à 1 µm.

7. Revêtement mural composite selon au moins l'une quelconque des revendications 1 à 6, **caractérisé en ce que** le revêtement céramique (2) comporte des particules d'oxydes des éléments Al, Zr, Si, Ti, Ce ou Fe.

8. Revêtement mural composite selon au moins l'une quelconque des revendications 1 à 7, **caractérisé en ce que** le revêtement céramique (2) comporte en tant que particules des agrégats POSS ou des silices hydrophobées.

9. Revêtement mural composite selon au moins l'une quelconque des revendications 1 à 8, **caractérisé en ce que** le revêtement céramique (2) présente une épaisseur inférieure à 100 µm.

10. Revêtement mural composite selon l'une quelconque des revendications 1 à 9, **caractérisé en ce que** le revêtement céramique (2) est perméable au rayonnement électromagnétique d'une longueur d'onde dans le domaine de la lumière visible.

11. Revêtement mural composite selon l'une quelconque des revendications 1 à 10, **caractérisé en ce que** la couche intermédiaire céramique (3) comporte des particules d'oxydes choisis parmi Al₂O₃, Zr0₂, Ti0₂ et/ou Si0₂ d'une taille de particule moyenne de 200 nm à 5 µm et un réseau comportant du silicium, le silicium du réseau étant relié par des atomes d'oxygène aux oxydes du revêtement céramique, par des radicaux organiques à la couche se trouvant sous la couche supérieure et par au moins une chaîne comportant des atomes de carbone à un autre silicium.

12. Revêtement mural composite selon l'une quelconque des revendications 1 à 11, **caractérisé en ce qu'**une couche intermédiaire qui contient un ou plusieurs composants choisis parmi les adhésifs, les agents d'accrochage, les liants, les colorants et les pigments est présente.

13. Revêtement mural composite selon au moins l'une quelconque des revendications 1 à 12, **caractérisé en ce que** le revêtement mural composite est flexible et peut être enroulé en un rouleau.

14. Procédé de fabrication d'un revêtement mural composite selon l'une quelconque des revendications 1 à 13, **caractérisé en ce que** pour la fabrication d'un revêtement céramique final (2) sur un matériau support (1) après application d'une ou de plusieurs couches intermédiaires (3), une suspension qui contient des particules céramiques en suspension dans un sol polymère, fabriquée par mélange d'au moins un silane avec un alcool et un acide, est appliquée et ultérieurement durcie,
la couche intermédiaire (3) étant appliquée par application et durcissement d'une suspension, qui comporte des particules d'un composant inorganique en suspension dans un sol, sur le matériau support (1) ou éventuellement d'autres couches intermédiaires (3) présentes et durcissement ultérieur de la suspension sur et éventuellement dans le matériau support (1) ou l'autre couche intermédiaire (3) éventuellement présente, et
la suspension utilisée pour la fabrication de la couche intermédiaire (3) comportant au moins un sol qui joue le rôle d'adhésif inorganique et au moins des particules d'un composant inorganique qui comporte essentiellement au moins un composé d'au moins un métal, d'au moins un semi-métal ou d'au moins un métal mixte avec au moins un élément des groupes principaux 3 à 7.

15. Procédé selon la revendication 14, **caractérisé en ce que** des oxydes, des carbures, des nitrures ou des borures de métaux ou de semi-métaux sont utilisés en tant que particules céramiques.

16. Procédé selon la revendication 14 ou 15,
**caractérisé en ce que** la suspension est durcie par chauffage lorsque le sol est à base de tétraéthoxysilane (TEOS), 3-glycidyloxytriméthoxysilane (GLYMO) et/ou 3-glycidyloxytriéthoxysilane (GLYEO) et/ou 3-méthacryloxypropyltriméthoxysilane (MEMO).

17. Procédé selon la revendication 16, **caractérisé en ce qu'**une suspension qui comporte des di- ou polyols est utilisée.

18. Procédé selon la revendication 16 ou 17,
**caractérisé en ce que** la suspension est fabriquée en deux étapes, un mélange d'un premier silane, d'un alcool et d'un acide dans lequel les particules sont mélangées étant tout d'abord fabriqué lors de la première étape et, lors d'une seconde étape, un silane supplémentaire et/ou un diol ou un polyol en tant que second composant étant ajouté à ce premier composant, avant que la suspension ne soit chauffée.

19. Procédé selon la revendication 18, **caractérisé en ce que** la suspension est fabriquée en deux étapes, un mélange de GLYEO, d'un alcool et d'un acide dans lequel les particules sont mélangées étant tout d'abord fabriqué lors de la première étape et, lors d'une seconde étape, du 3-aminopropyltriéthoxysilane (AMEO) et/ou du bisphénol A en tant que second composant étant ajouté à ce premier composant, avant que la suspension ne soit chauffée.

20. Procédé selon au moins l'une quelconque des revendications 16 à 19, **caractérisé en ce que** le chauffage a lieu pendant 1 seconde à 2 heures à des températures de 50 à 650 °C.

21. Procédé selon la revendication 14 ou 15,
**caractérisé en ce que** la suspension est durcie par traitement avec des rayonnements UV lorsque le sol est à base de méthacryloyl-oxypropyl-triméthoxysilane (MEMO).

22. Procédé selon au moins l'une quelconque des revendications 14 à 21, **caractérisé en ce qu'**une couche intermédiaire qui contient un adhésif, un agent d'accrochage, un colorant, des encres d'impression ou un liant est appliquée.

23. Procédé selon au moins l'une quelconque des revendications 14 à 22, **caractérisé en ce que** les couches individuelles sont appliquées sur le matériau support par un procédé bobine-bobine.
